# EUROPEAN PATENT APPLICATION

(11) **EP 4 729 312 A1**
(43) Date of publication of application: **22.04.2026**
(21) Application number: 25208905.7
(22) Date of filing: 15.10.2025
(51) Int. Cl.: B60C 99/00, B60C 23/18

(54) **MOTOR VEHICLE WHEEL CONFIGURED TO IMPROVE ROAD HOLDING, AND MOTOR VEHICLE PROVIDED WITH SUCH A WHEEL**

(30) Priority: 16.10.2024 IT 202400023025
(71) Applicant: FERRARI S.p.A., 41100 Modena (IT)
(72) Inventor: CAFFAGNI, Andrea, 41100 Modena (IT)
(74) Representative: Studio Torta S.p.A.

(57) **Abstract**

A motor vehicle wheel (10) has a rim (13) and a tyre (14) which defines, together with the rim (13), an annular chamber (15); the wheel furthermore has a heat exchanger (24) which is carried by the rim (13) and communicates with the outside via an inlet port and an outlet port for receiving and respectively circulating back a heat exchange liquid; the heat exchanger (24) forms part of a circuit (32) coupled to a heat source installed on the motor vehicle (1) for heating the heat exchange liquid and, therefore, improving the road holding.

## Description

### CROSS-REFERENCE TO RELATED APPLICATIONS

This patent application claims priority from Italian patent application no. 102024000023025 filed on October 16, 2024, the entire disclosure of which is incorporated herein by reference.

### TECHNICAL FIELD

The present invention concerns a motor vehicle wheel configured to improve road holding.

In particular, the present invention refers to a motor vehicle having a control unit provided with a closed loop control logic to improve the road holding of said wheel.

### PRIOR ART

As known, motor vehicle tyres are made of materials which, in general, have non-optimal road-holding performance when the tyre temperatures are relatively low, namely when the motor vehicle has only just started its travel and/or when the ambient temperatures are relatively low. In particular, road-holding performance is optimal when the tyre is in a given temperature range, namely above a minimum temperature and below a maximum temperature.

This variability in road-holding performance is particularly important for sports motor vehicles. During the first few kilometres of travel, the tyres heat naturally due to the friction on the road surface and reach the above-mentioned minimum temperature within a certain time interval, but drivers may wish or need to drive their motor vehicle at relatively high speeds right from the beginning of travel.

In this context, the further need is felt to improve the road-holding conditions via an appropriate system that allows monitoring of at least one operating parameter correlated with the road holding of the tyres, and consequently carry out an adjustment or a correction if said operating parameter does not fall within predefined thresholds.

For example, said thresholds are defined by the minimum temperature and maximum temperature mentioned above.

The object of the invention is therefore to meet the above needs, preferably in a simple and/or effective and/or inexpensive manner.

### SUMMARY OF THE INVENTION

According to the present invention, a motor vehicle wheel as defined in claim 1 and a motor vehicle as defined in claim 5 are provided.

The dependent claims define particular embodiments of the invention, which shall be considered included in the following description.

### BRIEF DESCRIPTION OF THE DRAWINGS

Below, for a better understanding of the present invention, preferred embodiments will be described by way of non-limiting example, with reference to the attached drawings, in which:
- figure 1 illustrates, schematically and partially, a motor vehicle provided with a preferred embodiment of the wheel according to the present invention, shown in cross section according to a meridian section plane on which the rotation axis of the wheel lies; and
- figure 2 is a different schematic view of the motor vehicle of figure 1, and shows an example of heat exchange circuit associated with the wheel of the present invention.

### DETAILED DISCLOSURE OF PREFERRED EMBODIMENTS OF THE INVENTION

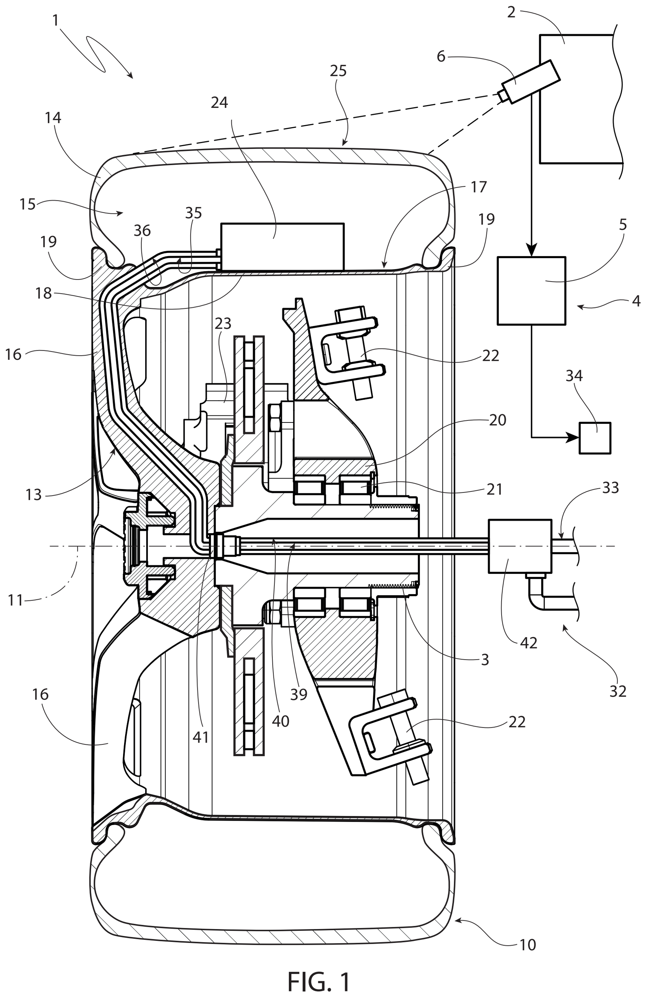

In figure 1, the reference number 1 indicates, as a whole, a motor vehicle (partially and schematically illustrated), comprising a support structure 2 (defined for example by a load-bearing chassis), a plurality of wheels mounted on respective hubs 3, which in turn are supported by the structure 2 via respective suspensions (not illustrated), and a system 4 for actively monitoring and regulating the road holding of the wheels based on control logics implemented in an electronic control unit 5 installed on said motor vehicle 1. The control unit 5 carries out said control logics in response to an input signal sent from at least one sensor 6 that communicates with the control unit 5, as will be described in detail below.

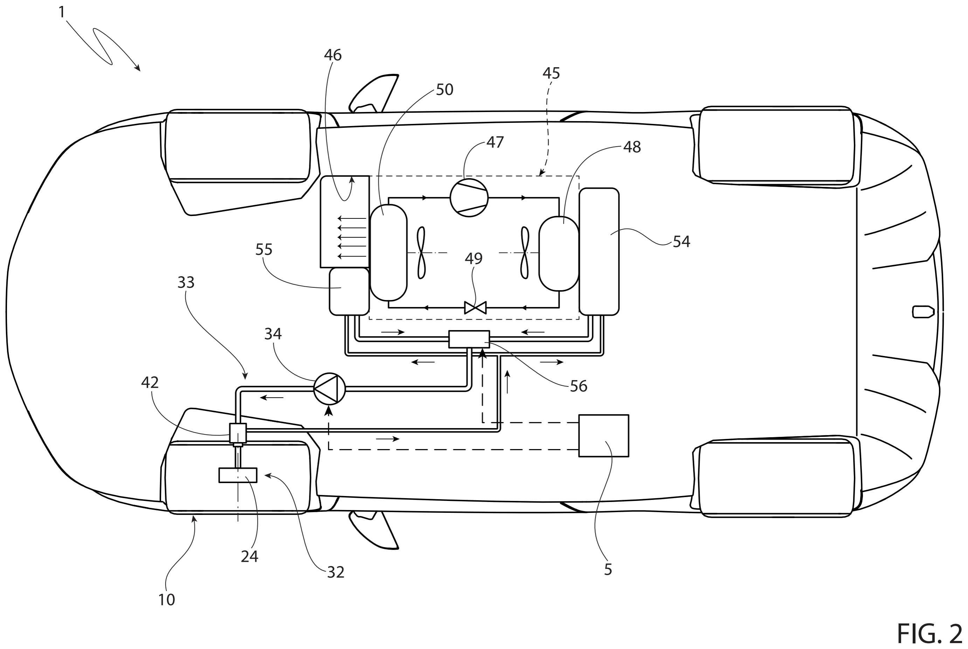

Figures 1 and 2 are relative to only one of the above-mentioned wheels, which is preferably a drive wheel and is indicated by the reference 10, but the following considerations apply to all the other wheels of the motor vehicle 1.

With reference to figure 1, the wheel 10 has an axis 11 coinciding, in use, with its rotation axis, and comprises a rim 13 coupled coaxially with the corresponding hub 3 in a fixed position, and a tyre 14, which is fitted on the rim 13 so as to define, together with the latter, an air-filled annular chamber 15. The chamber 15 can be preferably pressurized from the outside via a valve of known type (not illustrated), carried in a fixed position by the rim 13.

In particular, the rim 13 comprises a plurality of spokes 16 and an annular wall 17, which is arranged at the external radial end of the spokes 16, radially delimits the chamber 15 and is shaped so as to comprise an intermediate portion 18 and two shoulders 19 arranged at the opposite axial ends of the portion 18. The shoulders 19 protrude radially outwards with respect to the portion 18: at the shoulders 19, the wall 17 is shaped in order to couple, in a sealed manner, the beads of the tyre 14, according to shapes and techniques that are known and not described in detail.

The hub 3 is supported by a hub carrier body 20 by means of at least one bearing 21 so as to rotate about the axis 11, while the body 20 has fixing points 22 coupled in a known manner, not illustrated, to the corresponding suspension, so that it can oscillate with respect to the structure 2 in response to and depending on the bumps in the road. The body 20, with its fixing points 22, could be configured differently from what is illustrated purely by way of example. In particular, the body 20 supports a braking member, for example a brake calliper 23.

The system 4 comprises a heat exchanger 24, schematically illustrated, installed on the wheel 10 and forming part of a hydraulic circuit 32, which conveys a heat exchange liquid and is controlled by the control unit 5 so as to heat and, preferably, cool the air contained in the chamber 15. In particular, the circuit 32 is controlled in closed loop, in response to the input signal emitted by the sensor 6.

In the preferred embodiment, schematically illustrated, the sensor 6 is a temperature sensor, namely it provides an input signal which is indicative of the detected temperature. Preferably, the sensor 6 is an infrared sensor, hence it detects the temperature in remote mode, receiving electromagnetic waves in the infrared frequency range. More preferably, the sensor 6 is carried by the structure 2 in a fixed position and points directly towards an area of the tread surface 25 of the tyre 14.

Due to the rotation of the wheel 10, the entire circumference of the tread surface 25 passes below the detection field of the sensor 6, hence the control unit 5 can easily calculate a mean temperature value of said tread surface 25.

According to an embodiment not illustrated, the sensor 6 is defined by a temperature sensor that uses different detection techniques, for example it is defined by a thermocouple installed on the wheel 10, at the rim 13 or the tyre 14, in a position such as to detect the temperature of the rim 13, and/or of the air in the chamber 15 and/or of the tyre 14. Preferably, the sensor 6 is installed in a position such as to detect the temperature of the air in the chamber 15 (hence the control unit 5 can also obtain information relative to the inflation status of the wheel 10).

Preferably, the sensor 6 communicates with the control unit 5 in wireless mode, namely it sends the input signal via an antenna (not illustrated), without any electric connection. This type of communication plays an important role if the sensor 6 is installed directly on the wheel 10.

Preferably, based on the input signal received from the sensor 6, the control unit 5 is configured so as to determine a current operating parameter of the tyre 14, correlated with the road holding of the tyre 14. Said current operating parameter can be defined by the temperature value detected on the tread surface 25, or a different parameter, again correlated with the road holding.

The control unit 5 is configured so as to compare the current operating parameter, which has been determined, with one or more reference values which are stored and which are indicative of optimal road holding. For example, said reference values comprise a minimum temperature threshold value below which the road holding is not considered sufficient to guarantee driving safety if the motor vehicle 1 is travelling at relatively high speeds.

Preferably, the stored reference values also comprise a maximum temperature threshold value, beyond which the road holding would tend to drop below a limit level for guaranteeing driving safety at given speeds/performance.

The stored reference values can be variable based on the type of tyre 14 mounted on the wheel 10 and/or based on the conditions of the road surface (dry, wet, snowy, etc....) which can if necessary be determined by the control unit 5.

If the current operating parameter that has been determined based on the input signal does not satisfy the stored reference value (in this specific case, if the temperature detected is below the minimum threshold value), the control unit 5 activates the circuit 32 so as to cause the heat exchange fluid to flow through the heat exchange channels (not illustrated) inside the heat exchanger 24 and, therefore, transfer heat between the wheel 10 and the heat exchanger 24. The heat exchanged obviously depends on the temperature difference between the wheel 10 and the heat exchange liquid circulating in the heat exchanger 24.

To obtain this temperature difference, as shown schematically in figure 2, the thermal exchange liquid is heated, and if necessary cooled, at a portion 33 of the circuit 32, which is installed on the motor vehicle 1 in a fixed position with respect to the structure 2 and comprises at least one pump 34 for circulating the heat exchange liquid.

The control unit 5 de-activates the circuit 32 (for example by switching off the pump 34) to interrupt the heat exchange liquid flow in the heat exchanger 24 when the reference value is achieved.

With reference again to figure 1, the heat exchanger 24 is carried by the rim 13 and, preferably, is arranged in the chamber 15, so that the heat exchange channels of the heat exchanger 24 are lapped by the air contained in the chamber 15.

According to a different embodiment, not illustrated, the heat exchange channels of the heat exchanger 24 are made directly in a portion of the rim 13, and consequently no additional body is mounted on the rim 13.

Due to the temperature variation in the chamber 15, achieved by means of the heat exchange liquid circulating in the heat exchanger 24, the temperature of the tyre 14 changes by convection and, to a lesser extent, by radiation. In particular, during acceleration and braking of the motor vehicle 1 the air inside the chamber 15 accelerates and decelerates, in turn creating a mixing action that facilitates heat exchange by convection. At the same time, heat transfer between the heat exchanger 24 and the air contained in the chamber 15 can also lead to variations in the volume and/or pressure of the chamber 15.

According to variations, not illustrated, alternatively to or in combination with the heat exchange via the air in the chamber 15, the heat exchanger 24 can transfer heat from/to the tyre 14 by thermal conduction through the rim 13, if the latter is made of a thermally conductive material.

The circuit 32 can be configured to have only two operating conditions, namely "active" (with heat exchange liquid circulating) and "non-active" (with heat exchange liquid not circulating), or can be configured also to regulate flow rate and/or temperature of the heat exchange liquid circulating. Advantageously, the closed loop logics implemented in the control unit 5 include appropriate control systems (for example of PID type) to compensate for the inevitable thermal inertia of the wheel 10 and the circuit 32, in order to minimize the heat transfer times and, simultaneously, minimize the consumption required by the heating and by any cooling of the heat exchange liquid in the portion 33 of the circuit 32.

Again with reference to figure 1, the circuit 32 comprises, on the wheel 10, a delivery channel 35 for sending the heat exchange liquid towards the heat exchanger 24 (by the action of the pump 34), and at least one return channel 36 which conveys the heat exchange liquid back towards the portion 33 of the circuit 32. The channels 35 and 36 terminate, respectively, in an inlet port and an outlet port, which are connected by means of a coupling 41 (schematically illustrated) to respective channels 39 and 40, arranged at the hub 3. The coupling 41 is of per se known type, and is configured so as to guarantee the seal, in the communication between the channels 35 and 39 and in the communication between the channels 36 and 40, when the wheel 11 is mounted in a fixed position on the hub 3.

Preferably, the inlet port of the channel 35 and the outlet port of the channel 36 are coaxial and concentric to each other along the axis 11. More preferably, also the channels 39 and 40 are coaxial and concentric to each other along the axis 11. In particular, the channels 39 and 40 are carried by the hub 3, hence they rotate together with the hub 3.

The circuit 32 further comprises a coupling 42 (schematically illustrated) which connects the channels 39 and 40 to the portion 33 of the circuit 32. The coupling 42 is of the per se known type, and is configured to compensate for the oscillations of the wheel 10 with respect to the support structure 2 during travel and to guarantee the seal despite the rotation of the hub 3 about the axis 11.

In the preferred embodiment shown in figure 2, in order to heat and, if necessary, cool the heat exchange liquid, the portion 33 of the circuit 32 is coupled to an air conditioning system 45, partially and schematically illustrated, installed on the motor vehicle 1 to vary temperature and/or humidity of an air flow which is introduced into a passenger compartment 46 (schematically illustrated).

The system 45, of known type, is a closed loop circuit, which comprises: a compressor 47 operated to circulate a cooling fluid; a condenser 48, which receives the compressed cooling fluid, and is configured to transfer heat from the cooling fluid towards the outside; an expansion valve 49, arranged downstream of the condenser 48 and configured to determine a pressure drop in the cooling fluid; and an evaporator 50, arranged downstream of the expansion valve 49 and configured to transfer heat from the air flow introduced into the passenger compartment 46 towards the cooling fluid, which will then return to the compressor 47.

The condenser 48 is used as a heat source in order to heat the heat exchange liquid in the portion 33 of the circuit 32. In particular, the latter comprises a heat exchanger 54 coupled to the condenser 48 to receive heat from the cooling fluid. The heat transfer can, for example, occur by forced convection, via an air flow that passes through both the condenser 48 and the heat exchanger 54. Alternatively, the heat exchanger 54 can be integrated in the condenser 48, hence the heat is released by thermal conduction from the cooling fluid to the heat exchange liquid of the circuit 32, without exploiting any convective air flow.

As mentioned above, in addition to heating, the portion 33 of the circuit 32 is also configured to cool the heat exchange liquid, where required. In particular, the portion 33 of the circuit 32 comprises a heat exchanger 55 coupled with the evaporator 50 to transfer heat to the cooling fluid. For example, the heat exchanger 55 is integrated in a part of the evaporator 50, so that the heat is released by thermal conduction from the heat exchange liquid of the circuit 32 to the cooling fluid, without exploiting any convective air flow. In any case, it is expedient to design the coupling between the heat exchanger 55 and the evaporator 50 so as not to compromise cooling of the air introduced into the passenger compartment 46.

The portion 33 of the circuit 32 further comprises at least one valve 56 controlled by the control unit 5 so as to select whether to send to the heat exchanger 24 a heated flow or a cooled flow of heat exchange liquid. In particular, the valve 56 is a three-way valve. More in particular, the valve 56 is arranged downstream of the heat exchangers 54 and 55 and upstream of the pump 34; according to a variation, not illustrated, the valve 56 is arranged upstream of the heat exchangers 54 and 55.

As mentioned above, in figure 2 the portion 33 of the circuit 32 has been illustrated with reference to only one of the wheels of the motor vehicle 1, but the same considerations apply also to the other wheels.

In general, furthermore, in order to transfer heat in the portion 33 of the circuit 32, it is possible to exploit a heat source and/or heat exchangers which are already normally installed on the motor vehicle 1, but are different from the condenser 48 and the evaporator 50 cited above as a preferred embodiment.

An example of operation will now be briefly described, with reference to the preferred embodiment of figures 1 and 2.

In use, if the current temperature detected by the sensor 6 is below the minimum threshold value, the control unit 5 activates the circuit 32, for example by operating the pump 34. At the same time, the control unit 5 controls the valve 56 so as to select the heat exchanger 54 as the source of the heat exchange liquid to be sent to the heat exchanger 24. Therefore, a part of the heat exchange liquid heated by the air conditioning system 45 reaches the heat exchanger 24 and heats the tyre 14.

When the temperature detected reaches the minimum threshold value, the circuit 32 is de-activated, for example by stopping the pump 34.

The situation is analogous when the current temperature detected by the sensor 6 is above the maximum threshold value: the control unit 5 activates the circuit 32, for example by operating the pump 34, and controls the valve 56 so as to select the heat exchanger 55 as the source of the heat exchange liquid to be sent to the heat exchanger 24. Therefore, the part of heat exchange liquid which is cooled by the air conditioning system 45 reaches the heat exchanger 24 and, in turn, cools the tyre 14. When the temperature detected returns below the maximum threshold value, the circuit 32 is automatically de-activated by the control unit 5, for example by stopping the pump 34.

The system 4 therefore carries out an active control to improve the road holding, varying the temperature of the tyre 14. In fact, the control unit 5 activates the circuit 32 so as to increase the temperature value in order that the latter reaches the pre-set minimum threshold value, and therefore reaches optimal road holding in the shortest possible time, at starting of the motor vehicle 1 or in relatively cold ambient conditions.

With respect to other generic heating systems, as described above, the heat exchanger 24 can also receive a cooled liquid flow, to lower the temperature of the tyre 14 below the maximum threshold value, and not only to raise it above a minimum threshold value.

According to a different embodiment, not illustrated, the same operating principle of varying the temperature in the wheel 10 by means of the heat exchanger 24 is utilized with a sensor 6 which is defined by a pressure sensor, arranged on the wheel 10, alternatively to or in combination with the temperature sensor of the embodiments described above. In this case, the pressure sensor is arranged in a position such as to detect the pressure of the air in the chamber 15 and is configured to transmit a corresponding input signal, indicative of the detected pressure, to the control unit 5 (preferably in wireless mode) . For example, said pressure sensor is installed in the valve which is provided on the rim 13 for inflation of the chamber 15.

In other words, in this embodiment, the control of the control unit 5 always intervenes on the temperature, via the circuit 32, but is based on the detection of a different operating parameter, always indicative of the road holding, namely the air pressure detected in the chamber 15. In fact, it is commonly known that the road holding depends on the width of the tread surface 25 in contact with the road surface, and this width, in turn, depends on the internal pressure value of the wheel 10 (in addition to the load on the motor vehicle 1).

Advantageously, thanks to this type of monitoring, the heating of the air in the chamber 15 leads to an increase in the pressure of the air in the wheel 10, to reach a minimum road-holding threshold, also without having to pump a quantity of additional air into the chamber 15.

From the above it is evident that the heat exchanger 24 installed on the wheel 10 improves the road holding of the motor vehicle 1. In particular, as explained above in detail, the system 4 improves the road holding by means of a closed loop control intervening on the temperature, via the control of the circuit 32, and monitoring an operating parameter of the wheel 10, correlated with the road holding. Said operating parameter is defined by a temperature of the wheel 10 (for example on the tread surface 25), or by the pressure of the air detected in the chamber 15, or by a combination of these two detections.

Lastly, with respect to what is illustrated in the attached figures, modifications and variations can be made without departing from the protective scope defined by the attached claims.

In particular, the structure, the form and the dimensional proportions of the wheel 10, the hub 3 and the body 20 could be different from what is illustrated.

Furthermore, the layout of the circuit 32 could be different from the one shown in figure 2 by way of example.

## Claims

1. Motor vehicle wheel (10) comprising a rim (13) and a tire (14), defining, together with said rim (13), an annular chamber (15); **characterized by** comprising a heat exchanger (24) carried by said rim (13) and communicating with the outside through an inlet port and an outlet port for receiving and respectively circulating back a heat exchange liquid.

2. The motor vehicle wheel according to claim 1, wherein said heat exchanger (24) is arranged in said annular chamber (15).

3. The motor vehicle wheel according to claim 1, wherein said heat exchanger (24) is integrated in said rim (13).

4. The motor vehicle wheel according to any one of the preceding claims, wherein said inlet port and outlet port are coaxial and concentric to each other along a rotation axis (11) of the wheel.

5. Motor vehicle (1) comprising:
- a support structure (2)
- at least one hub (3) rotatable about an axis (11) and coupled to said support structure (2) via a suspension;
- at least one wheel (10) according to any one of the preceding claims, and coaxially mounted on said hub (3);
- a heat source;
- a system (4) for improving road holding; said system (4) comprising:
a) an electronic control unit (5);
b) a hydraulic circuit (32) comprising said heat exchanger (24) and a circuit portion (33), which is fixed with respect to said support structure (2), communicates with said inlet port and outlet port, and is controlled by said electronic control unit (5) so as to heat the heat transfer liquid via said heat source and to convey a heated flow to said inlet port.

6. The motor vehicle according to claim 5, wherein said system (4) comprises at least one sensor (6), which is configured to detect an operating parameter of said wheel (10) indicative of its road holding, and communicates with said electronic control unit (5) so as to send an input signal corresponding to the detected operating parameter; and wherein said electronic control unit (5) is configured to control said circuit portion (33) on the basis of said input signal so that said operating parameter exceeds a minimum threshold value.

7. The motor vehicle according to claim 5 or 6, wherein said motor vehicle further comprises a passenger compartment (46) and an air conditioning system (45) for varying temperature and/or humidity of an air flow introduced into said passenger compartment (46); and wherein said heat source defines part of said air conditioning system (45).

8. The motor vehicle according to claim 7, wherein said heat source is defined by a condenser (48) of said air conditioning system (45).

9. The motor vehicle according to any one of claims 5 to 8, wherein said circuit portion (33) is further configured to cool the heat exchange liquid and comprises at least one valve (56) controlled by said electronic control unit (5) so as to select whether to send, to said heat exchanger (24), said heated flow or a cooled flow.

10. The motor vehicle according to claim 9, wherein said motor vehicle further comprises a passenger compartment (46) and an air conditioning system (45) for varying temperature and/or humidity of an air flow introduced into said passenger compartment (46); and wherein said circuit portion (33) is configured to cool said heat exchange liquid via an evaporator (50) of said air conditioning system (45).

11. The motor vehicle according to claim 9 or 10, wherein said system (4) comprises at least one sensor (6), which is configured to detect an operating parameter of said wheel (10), indicative of its road holding, and communicates with said electronic control unit (5) so as to send an input signal corresponding to said detected operating parameter; and wherein said electronic control unit (5) is configured to control said circuit portion (33) on the basis of said input signal so that said operating parameter is below a maximum threshold value.
